# EUROPÄISCHE PATENTSCHRIFT

(11) **EP 2 430 732 B1**
(45) Veröffentlichungstag und Bekanntmachung des Hinweises auf die Patenterteilung: **23.04.2014**
(21) Anmeldenummer: 10722592.2
(22) Anmeldetag: 06.05.2010
(51) Int. Cl.: H01R 13/504, H02K 5/22, H02K 11/00, H01R 13/405, H02K 7/116

(54) **GEHÄUSETEIL, VERFAHREN ZUR HERSTELLUNG EINES GEHÄUSETEILS SOWIE FENSTERHEBERANTRIEBSEINHEIT**
HOUSING PART, METHOD FOR PRODUCING A HOUSING PART AND WINDOW LIFTING DRIVE UNIT
ÉLÉMENT BOÎTIER, SON PROCÉDÉ DE PRODUCTION ET UNITÉ D'ENTRAÎNEMENT DE LÈVE-VITRE

(30) Priorität: 15.05.2009 DE 202009007044 U
(43) Veröffentlichungstag der Anmeldung: 21.03.2012
(73) Patentinhaber: Brose Fahrzeugteile GmbH & Co., 96103 Hallstadt (DE)
(72) Erfinder: HERTHAN, Bernd, 96247 Michelau (DE); ROSENTHAL, Karl-Heinz, 96148 Baunach (DE); NEUMANN, Jürgen, 96237 Ebersdorf b. Coburg (DE); ÜBELEIN, Jörg, 96271 Grub am Forst (DE)
(74) Vertreter: FDST Patentanwälte
(86) Internationale Anmeldenummer: PCT/EP2010/002793
(87) Internationale Veröffentlichungsnummer: WO 2010/130371

(56) Entgegenhaltungen:
- EP-A1- 2 001 092
- DE-A1- 10 049 329
- US-A1- 2006 001 192

## Beschreibung

Die Erfindung betrifft ein Gehäuseteil, insbesondere zur elektrischen Kontaktierung von Pins in einer Steckerleiste. Des Weiteren betrifft die Erfindung ein Verfahren zur Herstellung eines Gehäuseteils und eine Fensterheberantriebseinheit mit einem derartigen Gehäuseteil.

Ein Gehäuseteil der eingangs genannten Art besteht üblicherweise aus einer Steckerleiste mit Pins und einem Steckergehäuse, in dem die Pins zur Kontaktierung beispielsweise mittels eines entsprechenden Steckers aufgenommen sind. Je nach Anwendungsbereich muss ein solches Gehäuseteil ganz bestimmte Anforderungen erfüllen. Man unterscheidet beispielsweise zwischen einer Anwendung in einem Trockenraum und einer Anwendung in einem Nassraum. In einem Trockenraum ist es nicht unbedingt notwendig, das Gehäuseteil dicht gegenüber Feuchtigkeit auszugestalten. In einem Nassraum hingegen, wie beispielsweise auf der Außenseite einer Tür eines Automobils, ist eine Dichtigkeit des Gehäuseteils unerlässlich. Hier besteht immer die Möglichkeit, dass Feuchtigkeit in das Gehäuseteil eindringt, wodurch die Funktionsfähigkeit eingeschränkt werden kann. Insbesondere eine mit den Pins jenseits der Steckerleiste kontaktierte Elektronik ist diesbezüglich empfindlich.

Aus diesem Grund sollte das Gehäuseteil, insbesondere für Nassraumanwendungen, dicht ausgebildet sein. Vor allem betrifft dies die Durchführung der Pins sowie die Verbindung zwischen der Steckerleiste und dem Steckergehäuse.

Um dieser Problematik zu entgehen, ist für Naßraumanwendungen häufig das Gehäuseteil mit einem integrierten Stecker zum Beispiel in einem Kunststoff-Spritzprozess hergestellt. Dabei ist der Stecker direkt dem Gehäuseteil angebunden. Durch den vorgeschalteten Stecker ist der Pinbereich insgesamt gegen eine äußere Feuchtigkeit abgeschottet. Dieser Fertigungsprozess erfordert allerdings einen höheren Prozessaufwand. Zusätzlich ist eine derartige integrale Verbindung nicht flexibel, da sie nachträglich nicht mehr gelöst werden kann. Darüber hinaus kann das Gehäuseteil mit Stecker nurmehr insgesamt variablen Anforderungen und insbesondere Kundenwünschen angepasst werden.

Vorteile in der Fertigung und eine weiter erhöhte Variabilität bringt der konstruktiv getrennte Verbau einer Steckerleiste mit einem Steckergehäuse. Zur Abdichtung ist es bekannt, die gefügten Komponenten durch ein Vergießen zu dichten. Dieser Prozess ist allerdings teuer und mit Problemen behaftet.

Bei einer konstruktiv getrennten Verbauung von Steckerleiste und Steckergehäuse mit einer Steuerplatine sind verschiedene Möglichkeiten zur elektrischen Kontaktierung der Pins mit einer Steuerplatine bekannt. Die Pins können einerseits direkt als ein fester Bestandteil der Elektronik auf einer Steuerplatine angebracht werden, zum Beispiel durch ein Verlöten oder durch ein Einpressen. Nachfolgend sind die Pins dann in den Gehäuseboden einzubringen. Andererseits können die Pins zuerst in eine Steckerleiste eingebracht werden, dann zusammen mit der Steckerleiste auf der Steuerplatine montiert werden und in einem separaten Prozess mit der Steuerplatine verlötet werden. Ein Einstecken oder Einpressen der Pins in die Steckerleiste oder in den Gehäuseboden führt jedoch nicht zu einer dichten Verbindung. Zwischen dem Material der Steckerleiste oder des Gehäusebodens und den Pins kann Feuchtigkeit eindringen. Zur Abdichtung wäre es vorstellbar, die Pins in ein Spritzwerkzeug einzusetzen und mit der Steckerleiste zu umspritzen, was aber wiederum aufwändig, teuer und mit Problem behaftet ist.

Aus der amerikanischen Patentanmeldung US 2006/001192 A1 ist eine Steckerleiste mit einem Kunststoffgrundkörper bekannt, wobei der Kunststoffgrundkörper mit Kunststoffmaterial umgespritzt ist.

Durch die Offenlegungsschrift DE 100 49 329 A1 ist eine wasserdichte Struktur bekannt, wobei zwei Teile eines Steckergehäuses und der Ummantelungsbereich einer ummantelten elektrischen Leitung, durch Ultraschall verschweißt werden.

Ein mit einem Gehäuse durch eine Laserschweißverbindung verbundener Steckverbinder ist in der europäischen Patentanmeldung EP 2 001 092 A1 beschrieben

Es ist eine Aufgabe der Erfindung, ein Gehäuseteil anzugeben, dass zum einen nur geringe Herstellungskosten aufweist und des Weiteren eine dichte Verbindung einer Steckerleiste mit einem Steckergehäuse gewährleistet. Ein derartiges Gehäuseteil kann dann insbesondere für die Verwendung in einem Nassraum zur Verfügung stehen.

Eine weitere Aufgabe der Erfindung ist es, ein Verfahren zur Herstellung eines derartigen Gehäuseteils anzugeben.

Zusätzlich ist es eine Aufgabe der Erfindung, eine Fensterheberantriebseinheit mit einem solchen Gehäuseteil anzugeben.

Die erstgenannte Aufgabe der Erfindung wird erfindungsgemäß gelöst durch ein Gehäuseteil mit der Merkmalskombination gemäß Anspruch 1.

Demnach umfasst das Gehäuseteil eine Steckerleiste mit einem Kunststoffgrundkörper, in den eine Anzahl von Pins eingebracht ist, eine Anzahl von Kunststoffmaterialanhäufungen, wobei die oder jede Kunststoffmaterialanhäufung jeweils einen Pin auf der Steckerleiste umläuft und zu dem jeweiligen Pin hin ansteigt, und ein Steckergehäuse mit einem Kunststoffgehäuseboden, der mit einer Anzahl von formangepassten Materialausnehmungen zur Aufnahme jeweils einer Kunststoffmaterialanhäufung versehen ist, wobei eine Kunststoffmaterialanhäufung jeweils in einer Materialausnehmung materialschlüssig mit dem Kunststoffgehäuseboden derart laserverschweißt ist, dass der jeweilige Pin gegenüber dem Kunststoffgehäuseboden abgedichtet ist.

In einem ersten Schritt geht die Erfindung davon aus, die Steckerleiste und das Steckergehäuse eines Gehäuseteils derart zu verbinden, dass insbesondere eine über die Pins kontaktierte Elektronikplatine jenseits der Steckerleiste vor Feuchtigkeit geschützt ist. Dazu könnten die Pins - wie erwähnt - in ein Spritzgusswerkzeug zur Herstellung der Steckerleiste eingesetzt und anschließend umspritzt werden. Hierdurch wird eine feste und dichte Verbindung zwischen den Pins und einer Steckerleiste gewährleistet. Allerdings ist die Herstellung einer derartigen Verbindung aufwendig und kostenintensiv, da die Pins vor dem Umspritzen einzeln und mit hohem Aufwand in die Spritzform eingebracht werden müssen. Eine Dichtigkeit zwischen dem Kunststoffgehäuseboden und der Steckerleiste ist hierdurch nicht gegeben.

In einem zweiten Schritt geht die Erfindung von der Tatsache aus, dass die Herstellung einer Steckerleiste durch ein Einlegen oder Einstecken einer Anzahl von Pins in einen vorgespritzten Kunststoffgrundkörper eine kostengünstige und einfach zu handhabende Möglichkeit bietet. Hierbei wird der Kunststoffgrundkörper einstückig mit entsprechenden Durchführungen gefertigt und die gewünschte Anzahl von Pins in die vorgefertigten Durchführungen eingebracht. Nachteilig hierbei ist jedoch, dass die Verbindung der Pins mit dem Kunststoffgrundkörper nicht dicht ist, so dass eine Anwendung in einem Nassraum nicht möglich ist.

In einem dritten Schritt erkennt die Erfindung, dass die genannte kostengünstige Herstellung einer Steckerleiste durch ein Einstecken der Pins in Durchführungen eines Kunststoffgrundkörpers überraschenderweise einfach zur Abdichtung der Steckerleiste sowohl bezüglich der Pins als auch gegenüber dem Steckergehäuse erweitert werden kann. Durch das Vorsehen einer schrägen Materialanhäufung gegenüber den Pins, die in eine entsprechende Materialausnehmung des Gehäusebodens aufgenommen wird, kann eine laserverschweißte, materialschlüssige Verbindung der Steckerleiste mit einem Steckergehäuse erzielt werden, wobei sowohl die Pins gegenüber dem Kunststoffgrundkörper als auch dieser gegenüber dem Kunststoffgehäuseboden abgedichtet sind.

Bei Druck auf oder durch Erwärmung der gegen den Pin angeschrägten Kunststoffmaterialanhäufung infolge des Laserschweißvorgangs erfolgt nämlich ein Materialversatz von Kunststoff in Richtung auf den jeweiligen Pin und somit in die Freiräume zwischen den eingebrachten Pins und dem Kunststoffgrundkörper. Hierdurch werden die Freiräume verschlossen, so dass ein Eindringen von Feuchtigkeit an den Pins vorbei durch die Durchführungen hindurch nicht mehr möglich ist. Zugleich wird durch das Laserschweißen die Kunststoffmaterialanhäufung in der Materialausnehmung materialschlüssig mit dem Kunststoffgehäuseboden des Steckergehäuses verbunden, wodurch der Kunststoffgehäuseboden an dem Kunststoffgrundkörper der Steckerleiste dicht befestigt ist. Insgesamt kann mit geringem Aufwand und kostengünstig ein Gehäuseteil mit der gewünschten Dichtigkeit erhalten werden. Zur Herstellung der Dichtigkeit zwischen den Pins und dem Kunststoffgrundkörper einerseits und zwischen dem Kunststoffgrundkörper bzw. der Steckerleiste und dem Gehäuseboden andererseits genügt ein einzelner Prozessschritt, nämlich das Laserverschweißen der in den Materialausnehmungen aufgenommenen Materialanhäufungen mit dem Gehäuseboden.

Das Gehäuseteil umfasst eine Steckerleiste mit einem Kunststoffgrundkörper. Die Steckerleiste kann in unterschiedlicher Geometrie ausgebildet sein. Beispielsweise kann sie eine runde oder eine eckige Form aufweisen, oder jeweils der gewünschten Anwendung hinsichtlich Bauraum oder Geometrie angepasst sein. Sie kann weiterhin entweder als ein einzelnes Bauteil gefertigt sein, so dass sie separat verbaut werden kann oder zum Beispiel bereits auf einer Steuerplatine vorbefestigt sein. Ferner kann die Steckerleiste vor dem Laserschweißen auch bereits im Sinne einer Vormontageeinheit mit dem Steckergehäuse verbunden sein.

In die Steckerleiste beziehungsweise in deren Kunststoffgrundkörper ist eine Anzahl von Pins eingebracht. Ein solcher Pin dient als elektrischer Anschluss für eine elektronische Schaltung oder Steuerung. Die Steckerleiste dient als Halterung der Pins. Auf der einen Seite sind die Pins mit der Elektronik beziehungsweise einer Elektronik- oder Steuerplatine verbunden. Auf der anderen Seite ragen die Pins in das Steckergehäuse und sind über einen Stecker zu kontaktieren. Der Pin kann beispielsweise als ein Flachleiter mit rechteckigem Querschnitt oder als Stift mit rundem Querschnitt ausgebildet sein und in seiner Länge variieren. Weiterhin kann ein Pin einen sich in Längsrichtung gleichbleibenden Querschnitt aufweisen oder der Querschnitt kann sich in Längsrichtung verjüngen.

Die Pins werden vor dem Laserschweißverfahren in die Durchführungen des Kunststoffgrundkörpers insbesondere lediglich lose eingelegt. Für die Erfindung ist es auch nicht ausgeschlossen, die Pins einzugießen oder mit dem Kunststoffgrundkörper zu umspritzen. Bevorzugt sind die Pins durch ein Einpressen oder Einstecken in die Durchführungen des Kunststoffgrundkörpers der Steckerleiste eingebracht. Der Einpressvorgang ist nur mit geringen Herstellungskosten verbunden und einfach zu handhaben.

Die einzelnen Pins werden nach dem Laserschweißen jeweils von einer Kunststoffmaterialanhäufung auf der Steckerleiste umlaufen. Vor dem Schweißvorgang brauchen die vorgefertigten Kunststoffmaterialanhäufungen die Pins nicht vollumfänglich zu umlaufen, sondern nur insoweit, als dass beim Laserschweißen genügend Material zur Abdichtung in den Zwischenraum zwischen Pin und Kunststoffgrundkörper gelangt. Infolge der formangepassten Aufnahme in der Materialausnehmung bleibt die Schräge der Materialanhäufung an sich im Wesentlichen bestehen.

Die Kunststoffmaterialanhäufung kann integraler Bestandteil der Steckerleiste sein, so dass die Steckerleiste insbesondere als ein einstückiges Bauteil gefertigt ist. Bevorzugt besteht deshalb die oder jede Kunststoffmaterialanhäufung aus dem gleichen Kunststoff wie der Kunststoffgrundkörper. Hierdurch können die beiden Teile in einem Prozessschritt beispielsweise als ein Spritzgussteil hergestellt werden, was die Montage erleichtert und die Produktionskosten senkt, da beide Komponenten zum Beispiel in einer Form gespritzt werden können.

Die Kunststoffmaterialanhäufung kann aber auch nachträglich beispielsweise mittels eines 2-Komponenten-Spritzverfahrens aufgespritzt werden und aus einem anderen Material als der Kunststoffgrundkörper bestehen. Letzteres erlaubt insbesondere eine Materialanpassung hinsichtlich des Laserschweißens. Die Kunststoffmaterialanhäufung kann sowohl in Längsrichtung als auch in Querrichtung mit unterschiedlichen Dicken ausgebildet sein. Insbesondere ist die Kunststoffmaterialanhäufung den Abmessungen des jeweiligen Pins und dem Kunststoffgrundkörper entsprechend ausgebildet.

Die Grundfläche der Kunststoffmaterialanhäufung kann an sich beliebig, beispielsweise auch mehreckig oder rund ausgebildet sein. Bevorzugt ist die Grundfläche der Geometrie bzw. dem Querschnitt des Pins angepasst. Mit anderen Worten ist hierdurch die Materialanhäufung um den Pin herum im Wesentlichen gleichverteilt. Hierdurch wird beim Laserschweißen aus jeder Richtung ein annähernd gleich großer Materialversatz zum Pin hin bewirkt. Die Kunststoffmaterialanhäufung kann je nach Größe und Anwendung in unterschiedlichen Winkeln und verschiedenen Steigungen gegenüber dem Pin ausgebildet sein. Durch die schräge Anordnung der Kunststoffmaterialanhäufung um den Pin herum wird bei Erwärmung, insbesondere beim Laserschweißen, aber auch bei Aufwendung von Druck ein zur Abdichtung gewünschter Materialversatz in Richtung auf die Pins bewirkt.

Der Materialversatz ist abhängig von dem Grad der Anschrägung der Kunststoffmaterialanhäufung. Die Anschrägung, also der Anstieg der Kunststoffmaterialanhäufung in Richtung auf den jeweiligen Pin, kann an die Größe und Form des Pins, beziehungsweise an abzudichtende Freiräume angepasst werden. Der Materialversatz ist abhängig von der Menge des Kunststoffs einer Materialanhäufung und insbesondere von der Kraft, die durch Erwärmung oder die Aufwendung eines Druckes auf diese wirkt. Über den Grad der Anschrägung beziehungsweise über den Winkel, in dem die Kunststoffmaterialanhäufung zu dem Kunststoffgehäuseboden verläuft, kann also der gewünschte Materialversatz bzw. bei Druckaufwendung die gewünschte Kraftkomponente für einen Materialversatz in Richtung auf den Pin eingestellt werden.

Weiterhin umfasst das Gehäuseteil ein Steckergehäuse mit einem Kunststoffgehäuseboden, der mit einer Anzahl von formangepassten Materialausnehmungen zur jeweiligen Aufnahme einer Kunststoffmaterialanhäufung ausgebildet ist. Das Steckergehäuse kann grundsätzlich verschieden ausgebildet sein, insbesondere ist es zur Verbindung mit der Steckerleiste ausgebildet, da diese beiden Komponenten im Gehäuseteil miteinander verbunden sind. Die zur Aufnahme der Kunststoffmaterialanhäufungen ausgebildeten formangepassten Materialausnehmungen des Kunststoffgehäusebodens bieten die Möglichkeit, die Steckerleiste und das Steckergehäuse aneinander zu fügen. Hierdurch sind die beiden Komponenten insbesondere schon vor Herstellung einer laserverschweißten materialschlüssigen Verbindung aneinander fixiert. Dadurch vereinfacht sich der eigentliche Laserschweiß-Prozess.

Unter einem Laserschweiß-Prozess versteht man allgemein ein Aufweichen oder eine Verflüssigung eines Materials durch Absorption von Laserstrahlung zum Ausbilden einer materialschlüssigen Verbindung zwischen verschiedenen Teilen. Beispielsweise können Kunststoffverbindungen insbesondere mittels eines sogenannten Überlappverfahrens laserverschweißt werden.

Bei diesem Verfahren werden zwei sich übereinander befindliche Kunststoffbauteile miteinander verbunden. Das obere Kunststoffbauteil ist in diesem Fall für die verwendete Laserwellenlänge transparent, so dass der Laser durch dieses hindurch dringen kann. In Ermangelung einer Strahlungsabsorption durch das Material erhitzt sich das obere Bauteil kaum. Das untere Kunststoffbauteil kann die Strahlung absorbieren, wozu beispielsweise geringe Mengen an absorbierenden Partikeln, wie Ruß beigemischt sein können. Das Kunststoffbauteil nimmt die Energie der Laserstrahlung auf und beginnt zu schmelzen, so dass der verflüssigte Kunststoff in eventuell vorhandene Freiräume laufen kann. Nach dem Abkühlen wird eine dichte und mechanisch feste Verbindung unterschiedlicher Kunststoffbauteile erhalten. Zum besseren Materialschluss können beide Partner passgenau gefertigt sein und beispielsweise auch vor dem Laserschweißen zusammengepresst sein. Alternativ können auch an einander grenzende Kunststoffbauteile durch Anwendung eines Laserstrahls lokal aufgeschmolzen und hierdurch miteinander materialschlüssig verbunden werden.

Ein großer Vorteil des Laserschweißverfahrens ist der durch den im Vergleich zu anderen Schweißverfahren geringere, konzentrierte Energieeintrag in das Bauteil. Die Folge ist unter anderem ein geringerer thermisch bedingter Verzug.

Überraschenderweise bietet die Erfindung insofern die Möglichkeit, unter Verwendung einer Steckerleiste mit eingesteckten Pins (ohne Dichtigkeit) mittels Laserschweißen eine materialschlüssige und dichte Verbindung einer Steckerleiste mit einem Steckergehäuse anzugeben, wobei in einem Arbeitsschritt sowohl die Verbindung zwischen dem Kunststoffgrundkörper und dem Kunststoffgehäuseboden hergestellt als auch die Pins gegenüber dem Kunststoffgrundkörper abgedichtet werden.

In einer vorteilhaften Ausführung der Erfindung steigt die oder jede Kunststoffmaterialanhäufung jeweils unter einem Winkel zwischen 20° und 60° gegenüber dem Kunststoffgrundkörper zu dem zugeordneten Pin hin an. In diesem Bereich kann beim Laserschweißen der zur Herstellung der Dichtheit gewünschte Materialversatz in Richtung auf den Pin erzeugt werden. Wird der Winkel zu klein, wird sich das Material beim Aufweichen nur unzureichend auf den Pin hin bewegen. Auf der anderen Seite wird bei einem zu großen Winkel unter vertikaler Druckanwendung die auf den Pin gerichtete Kraftkomponente für einen Materialversatz zu gering. Der Winkel kann im Fertigungsprozess unter Berücksichtigung der Größe und der geometrischen Ausbildung der Pins entsprechend gewählt sein. Zur Wahl des Winkels kann beispielsweise die benötigte Kraftkomponente zum Materialversatz der Kunststoffmaterialanhäufung bei einer Erwärmung oder einer Verflüssigung des Materials unter Auflage des Kunststoffgehäusebodens ermittelt werden und die Steckerleiste mit der Materialanhäufung dementsprechend hergestellt werden. Dabei ist zu beachten, dass der Winkel auch von dem gewählten Material der Materialanhäufung abhängig ist.

Bevorzugt ist die oder jede Materialausnehmung enger dimensioniert als die oder jede zugeordnete Kunststoffmaterialanhäufung. Beim Auflegen des Steckergehäuses auf die Steckerleiste kann somit schon die Kunststoffmaterialanhäufung in Richtung auf die Pins gedrückt werden. Das Auflegen des Steckergehäuses auf die Steckerleiste bedingt insofern bereits einen Materialversatz der Kunststoffmaterialanhäufung schon vor dem Laserschweißen. Bei einer konischen Verjüngung der Kunststoffmaterialanhäufung und bei entsprechend geformter Materialausnehmung kann durch Wahl des Anpressdrucks zwischen Gehäuseboden und Kunststoffgrundkörper schon ein für die Dichtheit des eingesetzten Pins relevanter gleichmäßiger Materialversatz in Richtung auf den Pin vor dem eigentlichen Fügeprozess erfolgen.

Die Grundfläche der oder jeder Kunststoffmaterialanhäufung ist weiter bevorzugt jeweils der Querschnittsform des oder jeden Pins angepasst. Dabei ist es zweckmäßig, die oder jede Kunststoffmaterialanhäufung ist jeweils mit einer konstanten Steigung gegen den zugeordneten Pin auszubilden. Hierdurch steht an jeder Stelle der umlaufenden Kunststoffmaterialanhäufung die gleiche Menge Material zur Verfügung, so dass ein gleichmäßiger Materialversatz rings um den Pin erreicht werden kann. Somit ist bezüglich der Dichtigkeit des Pins gegenüber dem Kunststoffgehäuseboden eine hohe Prozesssicherheit gewährleistet.

Bei Pins, die mit einem rechteckigen Querschnitt ausgebildet sind, ist in einer besonders vorteilhaften Ausgestaltung der Erfindung die oder jede Kunststoffmaterialanhäufung jeweils als ein Pyramidenstumpf mit einer rechteckigen Grundfläche ausgebildet, in der jeweils mittig der Pin angeordnet ist. Hierdurch wirkt bei einem Aufeinanderpressen von Steckerleiste und Steckergehäuse dieselbe Kraft auf die Materialanhäufung. Bei einem Pin mit einem runden Querschnitt ist die Kunststoffmaterialanhäufung vorteilhafterweise in Form eines Kegelstumpfes ausgebildet.

In einer weiteren vorteilhaften Ausgestaltung sind die Steckerleiste und das Steckergehäuse über eine Rastverbindung verbunden. Über eine Rastverbindung, zum Beispiel durch die Verwendung von in geeignete Rastaufnahmen eingreifende Rastkrallen, kann vor dem Laserschweißen in einfacher Weise ein Druck auf die Materialabhäufungen ausgeübt werden, so dass es bereits vor einer Erwärmung zu einem gewünschten Materialversatz in Richtung auf die Pins kommt.

Weiterhin wird die hinsichtlich des Verfahrens genannte Aufgabe erfindungsgemäß durch ein Herstellungsverfahren für ein Gehäuseteil mit der Merkmalskombination gemäß Anspruch 8 gelöst.

Demnach wird die Steckerleiste einstückig mit einer Anzahl von Durchführungen hergestellt, um die jeweils eine zur Durchführung hin ansteigende Kunststoffmaterialanhäufung angeordnet ist, wobei jeweils ein Pin in eine Durchführung eingebracht wird, wobei ein Steckergehäuse mit einem Kunststoffgehäuseboden gefertigt wird, in den Materialausnehmungen zur Aufnahme jeweils einer Kunststoffmaterialanhäufung eingebracht sind, wobei die Steckerleiste und das Steckergehäuse derart aufeinandergelegt werden, dass jeweils eine Kunststoffmaterialanhäufung in jeweils einer Materialausnehmung aufgenommen wird, und wobei die oder jede Kunststoffmaterialanhäufung in der zugeordnete Materialausnehmung derart mit dem Kunststoffgehäuseboden laserverschweißt wird, dass das Material der Kunststoffmaterialanhäufung jeweils gegen den zugeordneten Pin wandert, und dass der jeweilige Pin gegenüber dem Kunststoffgehäuseboden abgedichtet wird.

Die Steckerleiste und die Kunststoffmaterialanhäufung können beispielsweise aus dem gleichen Kunststoff bestehen, so dass sie einstückig als ein Spritzgussteil hergestellt werden können. Die Durchführungen können zum Beispiel durch ein Einstanzen in die Steckerleiste eingebracht werden oder direkt im Spritzgussverfahren durch die Verwendung einer entsprechend ausgebildeten Form eingebracht werden.

Die Pins können auf verschiedene Arten in die Durchführungen des Kunststoffgehäusebodens eingebracht werden. Insbesondere können sie lose in die Durchführungen eingelegt werden. Vorteilhafterweise werden die Pins in die Durchführungen eingepresst oder eingesteckt, so dass sie in den nachfolgenden Verfahrensschritten am Kunststoffgrundkörper bereits gehalten sind.

Die Materialausnehmungen im Kunststoffgehäuseboden des Steckergehäuses können entweder in einem einzigen Prozessschritt oder nachträglich eingebracht werden. Insbesondere kann das Steckergehäuse einstückig in einer Spritzgussform gefertigt werden.

Zur Montage wird das Steckergehäuse insbesondere mit einem geeigneten Anpressdruck unter Aufnahme der Kunststoffmaterialanhäufungen in den Materialausnehmungen auf die Steckerleiste aufgelegt, wobei insbesondere bei Vorsehen eines Anpressdrucks die Kunststoffmaterialanhäufung oder Material aus dieser unter Verformung gegen die Pins gedrückt wird. Der Anpressdruck, der gegebenenfalls vor dem Laserschweißen zur Erzeugung eines Materialversatzes auf den Pin hin aufgebaut wird, kann beispielsweise manuell oder mechanisch erzeugt werden. Hierdurch wirkt schon vor dem Laserschweißen eine Kraft auf den Pins, die sie in Ihrer Position in den Durchführungen hält.

Nach der Montage werden das Steckergehäuse und die Steckerleiste laserverschweißt, wobei die Kunststoffmaterialanhäufung in der Materialausnehmung mit dem Gehäuseboden gefügt wird. Beim Laserschweißen entsteht eine schmale und genaue Schweißnaht im Verbindungsbereich zwischen der Steckerleiste und das Steckergehäuse erreicht werden. Die Kunststoffmaterialanhäufung kann mittels eines Laserstrahls, dessen Wellenlänge, Strahlintensität und Strahlprofil für das jeweilige Material ausgewählt werden kann, erwärmt werden, so dass sich das Material verflüssigt. Das verflüssigte Material gelangt insbesondere auch infolge des Anpressdrucks, der beispielsweise von dem aufgelegten Steckergehäuse ausgeübt wird, aber auch infolge der Schräge in die Freiräume zwischen den Pins und dem Kunststoffgrundkörper. Nach dem Abkühlen des Materials entsteht so eine gleichmäßige und dichte materialschlüssige Verbindung der Steckerleiste mit dem Steckergehäuse. Dabei ist nun jeweils die Materialanhäufung in der Materialausnehmung mit dem Gehäuseboden materialschlüssig gefügt. Jeder Pin ist zudem von Kunststoff dicht umflossen.

Die hinsichtlich des Gehäuseteils zu weiteren Ausgestaltungen genannten Vorteile können hierbei sinngemäß auf das Verfahren übertragen werden.

Um bereits vor dem Laserschweißen einen Materialversatz in Richtung auf die Pins zu erhalten, werden die Steckerleiste und das Steckergehäuse in einer vorteilhaften Ausgestaltung der Erfindung unter Druck aufeinandergelegt. Hierdurch wird hinsichtlich des Schweißvorgangs und insbesondere hinsichtlich der Dichtheit eine hohe Prozesssicherheit erreicht.

Insbesondere ist zum Erreichen des Anpressdrucks eine Rastverbindung vor dem Laserschweißen bevorzugt. Hierzu werden die Steckerleiste und das Steckergehäuse vor dem Laserschweißen entsprechend verrastet. Durch eine vorgespannte Fixierung der beiden Komponenten vor dem Laserschweißen wird ein kontinuierlicher und gleichmäßiger Druck auf die Kunststoffmaterialanhäufungen ausgeübt, der bereits einen Materialversatz in Richtung auf die Pins bewirkt

Die drittgenannte Aufgabe wird erfindungsgemäß durch eine Fensterhebereinheit mit der Merkmalskombination gemäß Anspruch 12 gelöst.

Demnach umfasst die Fensterheberantriebseinheit einen Getriebeabschnitt, einen Motor, der mit dem Getriebeabschnitt gekoppelt ist, und einen Elektronikabschnitt, der ein Gehäuseteil nach einem der vorhergehenden Ansprüche sowie eine damit über die Steckerleiste verbundene Steuerplatine umfasst.

Die Fensterheberantriebseinheit weist einen Motor auf, der mit einem Getriebeabschnitt gekoppelt ist. Der Motor kann beispielsweise über ein sogenanntes Schneckengetriebe eine im Getriebeabschnitt angeordnete Seiltrommel antreiben. An der Seiltrommel sind die beiden Enden eines Zugseils derart angeschlagen, dass bei einer Drehung das eine Ende aufgewickelt und das andere Ende abgewickelt werden kann. Am Zugseil ist eine Anzahl von gegebenenfalls in Führungsschienen laufenden Mitnehmern befestigt, die wiederum eine Fensterscheibe tragen. Bei Antrieb der Seiltrommel kann das Fenster je nach Laufrichtung des Zugseils entweder geöffnet oder geschlossen werden. Auch sind andere Ausgestaltungen einer Fensterheberantriebseinheit umfasst, die ohne ein Zugseil auskommen.

Weiterhin ist der Fensterheberantriebseinheit ein Elektronikabschnitt zugeordnet, der ein Gehäuseteil und eine damit über die Steckerleiste verbundene Steuerplatine umfasst. Die Steuerplatine trägt insbesondere die Steuerelektronik für die Fensterheberantriebseinheit. Über das Steckergehäuse ist sie mittels der darin angeordneten Pins über einen geeigneten Stecker von außen für eine Ansteuerung oder zum Abgriff von Messsignalen wie beispielsweise einer erfassten Drehzahl oder dergleichen kontaktierbar. Insbesondere kann über die Steuerplatine auch die elektrische Versorgung des Motors geführt sein. Das Gehäuseteil selbst kann zusätzlich mit der Steuerplatine verbunden sein.

Die hinsichtlich verschiedener Ausgestaltung des Gehäuseteils genannten Vorteile können hierbei sinngemäß auf die Fensterheberantriebseinheit übertragen werden.

In einer vorteilhaften Ausgestaltung der Erfindung sind der Elektronikabschnitt und der Getriebeabschnitt integral miteinander verbunden. Dies ist insbesondere bei Antrieben mit integrierten Steuerungen der Fall. Durch die integrale Verbindung von Elektronikabschnitt und Getriebeabschnitt wirkt die gegen Feuchtigkeit dichte Schnittstelle zwischen der Steckerleiste und dem Steckergehäuse auf das gesamte Antriebsgehäuse. Das Steckergehäuse des Elektronikabschnitts stellt die einzige Schnittstelle nach außen dar. Das gesamte Antriebsgehäuse ist gegen Feuchtigkeit nach außen abgedichtet.

Im Folgenden wird die Erfindung anhand einer Zeichnung näher erläutert. Dabei zeigen:
- Fig. 1: einen Querschnitt durch ein Gehäuseteil mit einer Steckerleiste,
- Fig. 2: die Steckerleiste gem. Fig. 1 in einer Seitenansicht,
- Fig. 3: das Gehäuseteil gem. Fig. 1 in einer Draufsicht,
- Fig. 4: in einer Seitenansicht die einer Steuerplatine aufgesetzte Steckerleiste gem. Fig. 1,
- Fig. 5: das Gehäuseteil nach Fig. 1 in einer Seitenansicht und
- Fig. 6: eine Fensterheberantriebseinheit,
wobei die gleichen Komponenten in den einzelnen Figuren jeweils mit den gleichen Bezugszeichen versehen sind.

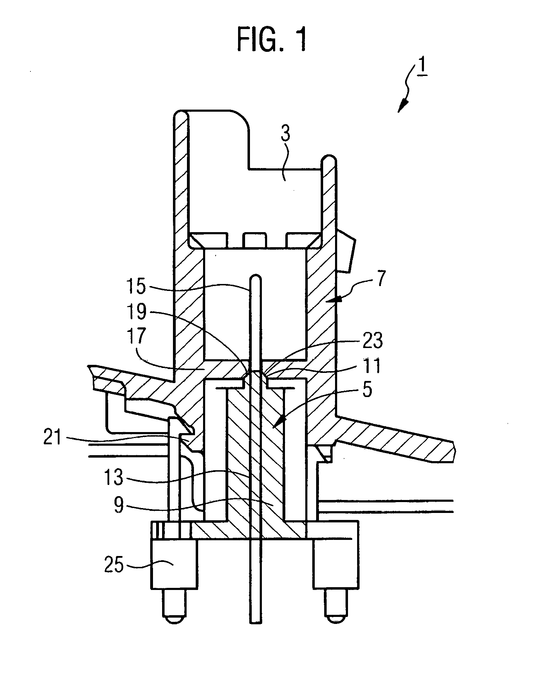

Fig.1 zeigt einen Querschnitt durch ein Gehäuseteil 1 mit einer Steckeraufnahme 3 und mit einer darunter angeordneten Steckerleiste 5. Die Steckeraufnahme 3 ist Teil des Steckergehäuses 7. Steckerleiste 5 und Steckeraufnahme 3 sind konstruktiv getrennt als Einzelteile gefertigt. In Fig. 1 ist das Gehäuseteil 1 bereits in gefügter Form dargestellt. Die Steckerleiste 5 ist durch ein Laserschweißverfahren mit der Steckeraufnahme 3 verbunden.

Die Steckerleiste 5 umfasst einen Kunststoffgrundkörper 9, der eine Anzahl von Kunststoffmaterialanhäufungen 11 trägt, von denen aufgrund des Querschnitts nur eine zu sehen ist. Die Steckerleiste 5 insgesamt ist einstückig als ein Spritzgussteil gefertigt.

Der Kunststoffgrundkörper 9 weist eine Anzahl von Durchführungen 13 auf, die mittels einer geeigneten Form beim Spritzen erzeugt sind. In jede der Durchführungen 13 ist ein Pin 15 eingebracht. Die Pins 15 sind in die Durchführungen 13 des Kunststoffgrundkörpers 9 leicht eingepresst. Sie weisen einen rechteckigen Querschnitt auf und sind jeweils als Flachleiter ausgebildet. Die um jeden Pin 15 angeordneten Kunststoffmaterialanhäufungen 11 sind jeweils als ein Pyramidenstumpf mit einer rechteckigen Grundfläche und vier gegen den jeweiligen Pin 15 geneigten Seitenflächen ausgebildet.

Jede Kunststoffmaterialanhäufung 11 umläuft auf der Steckerleiste 5 jeweils den zugeordneten Pin 15 und ist zu dem Pin 15 hin ansteigend ausgebildet. Die Seitenflächen der Kunststoffmaterialanhäufung 11 sind jeweils unter einem Winkel von etwa 45° zum Kunststoffgrundkörper 9 zum Pin 15 hin ansteigend geneigt.

Zur Fügung der Steckerleiste 5 an das Steckergehäuse 7 weist dieses einen Kunststoffgehäuseboden 17 auf, der mit formangepassten Materialausnehmungen 19 ausgebildet ist. In jede Materialausnehmung 19 ist nach Fügung der Steckerleiste 5 eine Kunststoffmaterialanhäufung 11 aufgenommen.

Zur Fügung durch Laserschweißen ist die Steckerleiste 5 mit einem Anpressdruck gegen das Steckergehäuse 7 gepresst. Dazu werden die beiden Komponenten über Rastkrallen 21 miteinander verrastet, wodurch schon vor dem Laserschweißen ein vertikaler Druck auf die Materialanhäufungen 11 wirkt. Über die in den Materialausnehmungen 19 auf die jeweilige Materialanhäufung 11 wirkenden schrägen Seitenwände 23 wird eine Kraftkomponente in Richtung auf die Pins 15 erzeugt. Hierdurch wird vor dem Laserschweißen ein Materialversatz in Richtung auf die Pins 15 erwirkt. Dadurch werden in den Durchführungen 13 etwaig vorhandene Lücken zwischen den Pins 15 und dem Kunststoffgehäuseboden 17 teils schon mit Kunststoff verschlossen.

Die Kunststoffmaterialanhäufungen 11 sind nachfolgend in den Materialausnehmungen 19 der Steckerleiste 5 mit dem Kunststoffgehäuseboden 17 laserverschweißt. Dazu wird jede Kunststoffmaterialanhäufung 11 sowie der darüber liegende Kunststoffgehäuseboden 17 mittels eines entsprechend fokussierten Laserstrahls lokal erwärmt, so dass insbesondere Material aus der Kunststoffmaterialanhäufung 11 in noch vorhandene Freiräume um die Pins 15 läuft. Durch die lokale Erweichung des Kunststoffs sowohl des Kunststoffgehäusebodens 17 als auch der Kunststoffmaterialanhäufung 11 werden beide in den jeweiligen Materialausnehmungen 19 miteinander materialschlüssig verbunden. Somit sind nach dem Laserschweiß-Vorgang sowohl die Pins 15 gegenüber dem Kunststoffgrundkörper 9 als auch dieser gegenüber dem Kunststoffgehäuseboden 17 materialdicht gefügt und eine gegebenenfalls eine mit den Pins 15 jenseits der Steckerleiste 5 kontaktierte Elektronik gegen eindringende Feuchtigkeit abgedichtet. Durch die schrägen Seitenwände 23 der Kunststoffmaterialanhäufungen 11, die in den Materialausnehmung 19 des Kunststoffgehäusebodens 17 aufgenommen sind, kann eine dichte Verbindung der Steckerleiste 5 mit einem Steckergehäuse 7 erzielt werden.

Am Kunststoffgrundkörper 9 der Steckerleiste 5 sind Montagefüßchen 25 angebracht, die es ermöglichen, die Steckerleiste 5 auf einer in Fig. 1 nicht gezeigten Steuerplatine, die eine Elektronikschaltung trägt und mit den Pins 15 jenseits der Steckerleiste 5 elektrisch kontaktiert ist, zu befestigen.

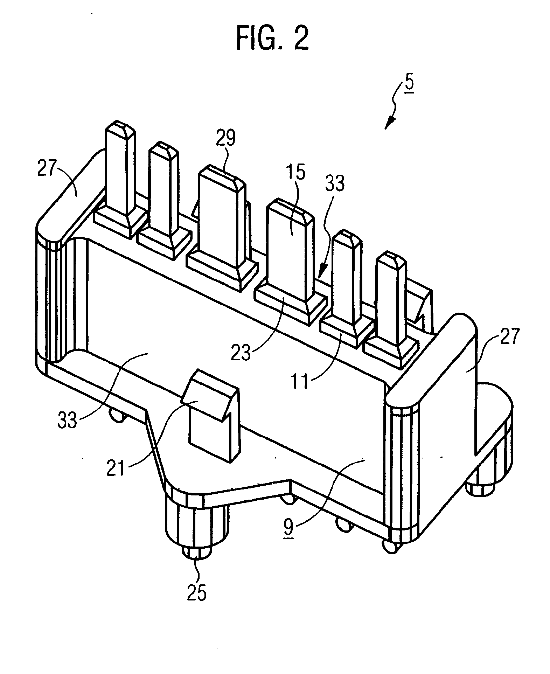

Fig. 2 zeigt die Steckerleiste 5 gem. Fig. 1 vor ihrer Montage in einer Seitenansicht. Der Kunststoffgrundkörper 9 der Steckerleiste 5 ist im Wesentlichen rechteckig ausgebildet. Man erkennt die beiden kürzeren sich in einer Querrichtung erstreckenden und die beiden längeren, sich in einer Längsrichtung erstreckenden Seiten 27 bzw. 33. In entsprechende Durchführungen des Kunststoffgrundkörpers 9 ist eine Anzahl von Pins 15 mit unterschiedlichem rechteckigem Querschnitt eingesteckt. Die Pins 15 zeigen an ihren oberen Enden 29 jeweils einen sich verjüngenden Querschnitt. Um jeden Pin 15 ist mit entsprechend angepasster Grundfläche jeweils eine Kunststoffmaterialanhäufung 11 vorgesehen. Die gesamte Steckerleiste 5 ist als ein Spritzgußteil gefertigt. Die in Richtung auf die Pins 15 ausgebildeten schrägen Seitenwände 23 der Kunststoffmaterialanhäufungen 11 sind deutlich zu erkennen. Jede Kunststoffmaterialanhäufung 11 ist als ein Pyramidenstumpf mit rechteckiger Grundfläche ausgebildet. Durch die Ausübung von Druck, insbesondere beim Aufpressen des in Fig. 1 gezeigten Steckergehäuses 7 und bei Aufweichung durch das beschriebene Laserschweißen, wandert Material der Kunststoffmaterialanhäufung 11 in Richtung auf die Pins 15 und verschließt so bestehende Freiräume.

An der Unterseite des Kunststoffgrundkörpers 9 sind die Montagefüßchen 25 angebracht, mit denen die Steckerleiste 5 direkt auf einer nicht gezeigten Platine befestigt werden kann. An den längeren Seiten 33 der Steckerleiste 5 sind Rastkrallen 21 zur Verrastung mit dem in Fig. 1 gezeigten Steckergehäuse 7 angebracht. Durch diese Rastverbindung werden die Fügeteile vor dem Laserschweißen unter einer Vorspannung gegeneinander gehalten. Weiter sind hierdurch die beiden Teile fixiert, so dass beim anschließenden Laserschweiß-Prozess eine feine und genau positionierte Schweißnaht im Verbindungsbereich zwischen der Steckerleiste 5 und dem Steckergehäuse 7 erreicht wird.

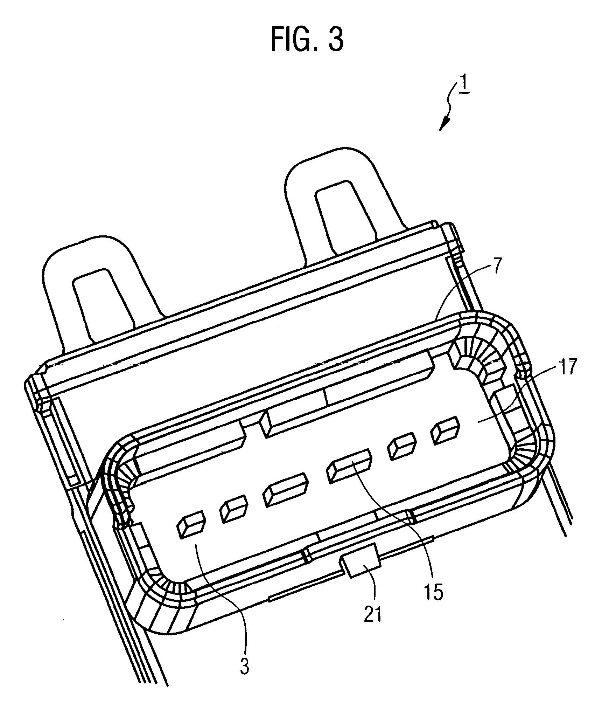

In Fig. 3 ist das Gehäuseteil 1 gemäß Fig. 1 mit dem Steckergehäuse 7 in einer Draufsicht zu sehen. Aufgrund der Perspektive sind die unterhalb des Steckergehäuses 7 angepresste Steckerleiste und dementsprechend auch die Kunststoffmaterialanhäufungen und der Kunststoffgrundkörper nicht zu sehen. Die Steckerleiste 5 gemäß Fig. 2 ist dem Steckergehäuse 7 von unten mittels Laserschweißen angefügt.

In den nicht mehr erkennbaren Materialausnehmungen des Kunststoffgehäusebodens 17 des Steckergehäuses 7 sind die Pins 15 mit unterschiedlichen Grundflächen angeordnet. Die Pins 15 sind gegenüber dem Kunststoffgehäuseboden 17 abgedichtet. Zur zusätzlichen Fixierung sind das Steckergehäuse 7 und die Steckerleiste über die Rastkrallen 21 verbunden. Die Rastverbindung bleibt auch nach dem Fügeprozess bestehen. Über einen geeignet geformten Stecker, der in der Steckeraufnahme 3 aufgenommen werden kann, werden die Pins 15 entsprechend elektrisch kontaktiert.

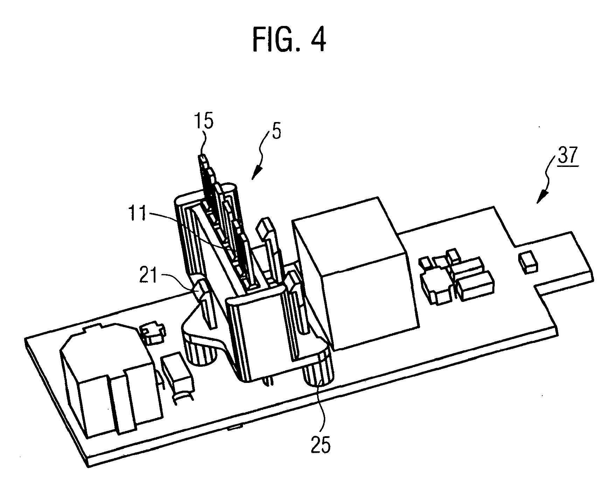

Fig. 4 zeigt die Steckerleiste 5 gem. Fig. 2 in einer Seitenansicht, die vor der Montage bereits auf einer Steuerplatine 37 angebracht ist. Die Steckerleiste 5 ist dabei über die Montagefüßchen 25 auf der Steuerplatine 37 befestigt. Die Pins 15 werden jeweils von einer Kunststoffmaterialanhäufung 11 umlaufen, die zu diesen mit einer konstanten Steigung hin ansteigend ausgebildet sind. Weiterhin sind die Rastkrallen 21 zur Verrastung mit dem in Fig. 4 nicht gezeigten Steckergehäuse erkennbar. Auf der Steuerplatine 37 ist mit verschiedenen elektronischen Bauteilen eine Steuerelektronik für einen Fensterheberantrieb realisiert. Die Steuerelektronik ist mit den Pins 15 jenseits der Steckerleiste 5 elektrisch kontaktiert.

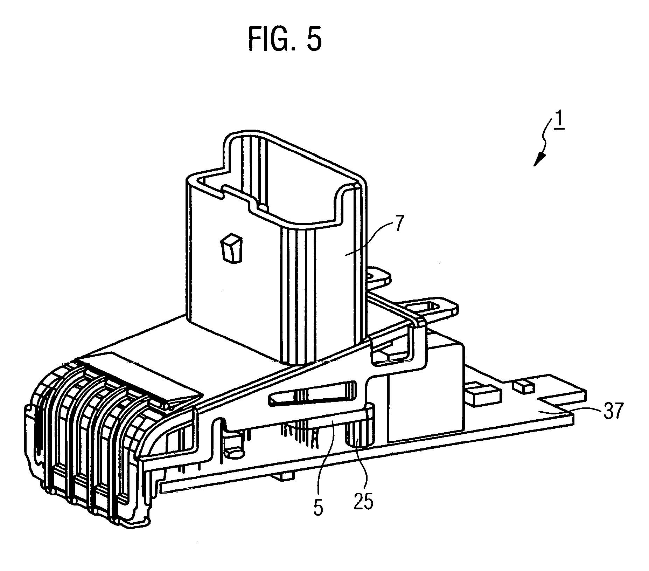

Fig. 5 zeigt das Gehäuseteil 1 in einer Seitenansicht mit der Steckerleiste 5 und dem Steckergehäuse 7 nach der Montage. Das Gehäuseteil 1 ist einerseits über die an der Steckerleiste 5 angebrachten Montagefüßchen 25 auf der Steuerplatine 37 befestigt. Andererseits hintergreift ein Gehäuseabschnitt in Fig. 5 links die Steuerplatine 37, so dass im Zusammenspiel mit der Rastverbindung durch die Rastkrallen gem. Fig. 4 das Steckergehäuse 7 fest mit der Steckerleiste 5 verbunden ist. Die einzelnen in Fig. 5 gezeigten Komponenten entsprechen im Wesentlichen den vorherigen Figuren, so dass die Ausführungen zu Fig. 5 sinngemäß aus den Beschreibungen der Fig. 1 bis Fig. 4 übernommen werden können.

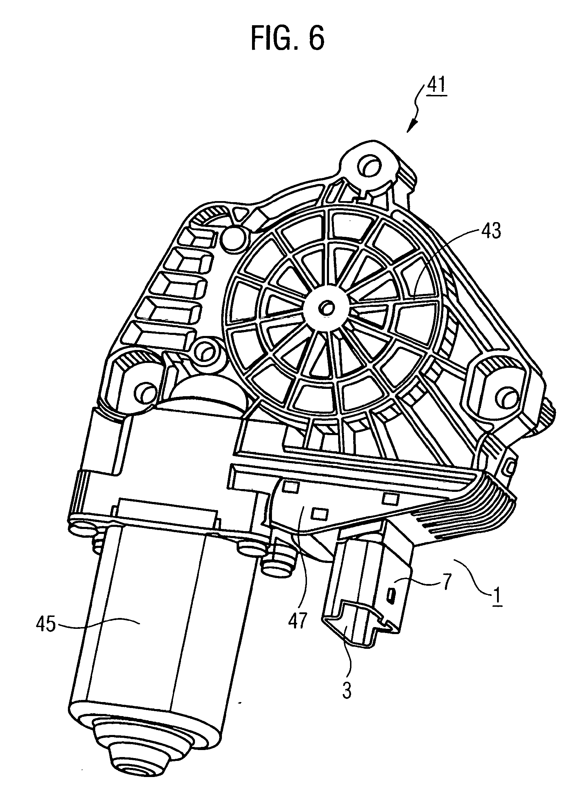

In Fig. 6 ist eine Fensterheberantriebseinheit 41 mit einem Getriebeabschnitt 43, einem Motor 45 und einem Elektronikabschnitt 47 gezeigt. Der Motor 45 ist mit dem Getriebeabschnitt 43 gekoppelt. Über ein Schneckengetriebe im Getriebeabschnitt 43 treibt der Motor 45 eine auf der Rückseite angeordnete Seiltrommel zur Bewegung eines nicht gezeigten Fensterhebers an. Der Elektronikabschnitt 45 umfasst ein Gehäuseteil 1 und eine nicht zu sehende Steuerplatine, die innerhalb des Elektronikabschnitts 45 entsprechend Fig. 4 und 5 angeordnet ist. Die mit der Steuerelektronik der Steuerplatine kontaktierte Pins tragende Steckerleiste ist in dem Steckergehäuse 7 aufgenommen. Über die Steckeraufnahme 3 des Gehäuseteils 1 kann die Fensterheberantriebseinheit 41 beispielsweise über einen Stecker zur Ansteuerung verbunden werden.

### Bezugszeichenliste

- 1: Gehäuseteil
- 3: Steckeraufnahme
- 5: Steckerleiste
- 7: Steckergehäuse
- 9: Kunststoffgrundkörper
- 11: Kunststoffmaterialanhäufung
- 13: Durchführung
- 15: Pin
- 17: Kunststoffgehäuseboden
- 19: Materialausnehmung
- 21: Rastkralle
- 23: Seitenwand
- 25: Kontaktfüßchen
- 27: kurze Seite des Kunststoffgrundkörpers
- 29: oberes Ende eines Pins
- 33: lange Seite des Kunststoffgrundkörpers
- 37: Steuerplatine
- 41: Fensterheberantriebseinheit
- 43: Getriebeabschnitt
- 45: Motor
- 47: Elektronikabschnitt

## Patentansprüche

1. Gehäuseteil (1), umfassend eine Steckerleiste (5) mit einem Kunststoffgrundkörper (9), in den eine Anzahl von Pins (15) eingebracht ist, eine Anzahl von Kunststoffmaterialanhäufungen (11), wobei die oder jede Kunststoffmaterialanhäufung (11) jeweils einen Pin (15) auf der Steckerleiste (5) umläuft und zu dem jeweiligen Pin (15) hin ansteigt, und ein Steckergehäuse (7) mit einem Kunststoffgehäuseboden (17), der mit einer Anzahl von formangepassten Materialausnehmungen (19) zur Aufnahme jeweils einer Kunststoffmaterialanhäufung (11) versehen ist, wobei eine Kunststoffmaterialanhäufung (11) jeweils in einer Materialausnehmung (19) materialschlüssig mit dem Kunststoffgehäuseboden (17) derart laserverschweißt ist, dass der jeweilige Pin (15) gegenüber dem Kunststoffgehäuseboden (17) abgedichtet ist.

2. Gehäuseteil (1) nach Anspruch 1,
wobei die oder jede Kunststoffmaterialanhäufung (11) jeweils unter einem Winkel zwischen 20° und 60° gegenüber dem Kunststoffgrundkörper (9) zu dem zugeordneten Pin (15) hin ansteigt.

3. Gehäuseteil (1) nach Anspruch 1 oder 2,
wobei die oder jede Materialausnehmung (19) enger dimensioniert ist als die oder jede zugeordnete Kunststoffmaterialanhäufung (11).

4. Gehäuseteil (1) nach einem der vorhergehenden Ansprüche,
wobei die Grundfläche der oder jeder Kunststoffmaterialanhäufung (11) jeweils der Querschnittsform des oder jeden Pins (15) angepasst ist, und wobei die oder jede Kunststoffmaterialanhäufung (11) jeweils mit einer konstanten Steigung gegen den zugeordneten Pin (15) ausgebildet ist.

5. Gehäuseteil (1) nach einem der vorhergehenden Ansprüche,
wobei die oder jede Kunststoffmaterialanhäufung (11) jeweils als ein Pyramidenstumpf mit einer rechteckigen Grundfläche ausgebildet ist, in dem jeweils mittig ein rechteckiger Pin (15) angeordnet ist.

6. Gehäuseteil (1) nach einem der vorhergehenden Ansprüche,
wobei die oder jede Kunststoffmaterialanhäufung (11) aus dem gleichen Kunststoff wie der Kunststoffgrundkörper (9) besteht.

7. Gehäuseteil (1) nach einem der vorhergehenden Ansprüche,
wobei die Steckerleiste (5) und das Steckergehäuse (7) über eine Rastverbindung verbunden sind.

8. Verfahren zur Herstellung eines Gehäuseteils (1),
wobei die Steckerleiste (5) einstückig mit einer Anzahl von Durchführungen (13) hergestellt wird, um die jeweils eine zur Durchführung hin ansteigende Kunststoffmaterialanhäufung (11) angeordnet ist, wobei jeweils ein Pin (15) in eine Durchführung (13) eingebracht wird, wobei ein Steckergehäuse (7) mit einem Kunststoffgehäuseboden (17) gefertigt wird, in den Materialausnehmungen (19) zur Aufnahme jeweils einer Kunststoffmaterialanhäufung (11) eingebracht sind, wobei die Steckerleiste (5) und das Steckergehäuse (7) derart aufeinandergelegt werden, dass jeweils eine Kunststoffmaterialanhäufung (11) in jeweils einer Materialausnehmung (19) aufgenommen wird, und wobei die oder jede Kunststoffmaterialanhäufung (11) in der zugeordneten Materialausnehmung (19) derart mit dem Kunststoffgehäuseboden (17) laserverschweißt wird, dass das Material der Kunststoffmaterialanhäufung (17) jeweils gegen den zugeordneten Pin (15) wandert, und der jeweilige Pin (15) gegenüber dem Kunststoffgehäuseboden (17) abgedichtet wird.

9. Verfahren zur Herstellung eines Gehäuseteils nach Anspruch 8,
wobei die Steckerleiste (5) und das Steckergehäuse (7) unter Druck aufeinandergelegt werden.

10. Verfahren nach Anspruch 8 oder 9,
wobei die Steckerleiste (5) und das Steckergehäuse (7) zur Ausbildung eines Druckes verrastet werden.

11. Fensterheberantriebseinheit (41), umfassend einen Getriebeabschnitt (43), einen Motor (45), der mit dem Getriebeabschnitt (43) gekoppelt ist, und einen Elektronikabschnitt (47), der ein Gehäuseteil (1) nach einem der vorhergehenden Ansprüche sowie eine damit über die Steckerleiste (5) verbundene Steuerplatine (49) umfasst.

12. Fensterheberantriebseinheit nach Anspruch 11,
wobei der Elektronikabschnitt (47) und der Getriebeabschnitt (43) integral miteinander verbunden sind.

## Claims

1. Housing part (1), comprising a connector strip (5) with a main plastic body (9), in which a number of pins (15) are incorporated, a number of accumulations of plastic material (11), the or each accumulation of plastic material (11) respectively running around a pin (15) on the connector strip (5) and rising up towards the respective pin (15), and a connector housing (7) with a plastic housing base (17), which is provided with a number of shape-adapted material clearances (19) for respectively receiving an accumulation of plastic material (11), an accumulation of plastic material (11) in a material clearance (19) being respectively laser-welded as one material to the plastic housing base (17) in such a way that the respective pin (15) is sealed off with respect to the plastic housing base (17).

2. Housing part (1) according to Claim 1, the or each accumulation of plastic material (11) respectively rising up towards the assigned pin (15) at an angle of between 20° and 60° with respect to the main plastic body (9).

3. Housing part (1) according to Claim 1 or 2, the or each material clearance (19) being dimensioned so as to be narrower than the or each assigned accumulation of plastic material (11).

4. Housing part (1) according to one of the preceding claims, the base area of the or each accumulation of plastic material (11) being respectively adapted to the cross-sectional shape of the or each pin (15), and the or each accumulation of plastic material (11) being respectively formed with a constant incline towards the assigned pin (15).

5. Housing part (1) according to one of the preceding claims, the or each accumulation of plastic material (11) being respectively formed as a truncated pyramid with a rectangular base area, in which a rectangular pin (15) is respectively arranged in the middle.

6. Housing part (1) according to one of the preceding claims, the or each accumulation of plastic material (11) consisting of the same plastic as the main plastic body (9).

7. Housing part (1) according to one of the preceding claims, the connector strip (5) and the connector housing (7) being connected by way of an interlocking connection.

8. Method for producing a housing part (1), the connector strip (5) being produced in one piece with a number of lead-throughs (13), around which an accumulation of plastic material (11) rising towards the lead-through is respectively arranged, a pin (15) being respectively inserted into a lead-through (13), a connector housing (7) being fabricated with a plastic housing base (17), incorporated in which are material clearances (19) for respectively receiving an accumulation of plastic material (11), the connector strip (5) and the connector housing (7) being placed one on top of the other in such a way that in each case an accumulation of plastic material (11) is respectively received in a material clearance (19), and the or each accumulation of plastic material (11) in the assigned material clearance (19) being laser-welded to the plastic housing base (17) in such a way that the material of the accumulation of plastic material (11) respectively migrates towards the assigned pin (15), and the respective pin (15) is sealed off with respect to the plastic housing base (17).

9. Method for producing a housing part according to Claim 8, the connector strip (5) and the connector housing (7) being placed one on top of the other under pressure.

10. Method according to Claim 8 or 9, the connector strip (5) and the connector housing (7) being interlocked to form a pressure.

11. Window lifting driver unit (41), comprising a transmission portion (43), a motor (45), which is coupled to the transmission portion (43), and an electronics portion (47), which comprises a housing part (1) according to one of the preceding claims and also a control board (49) connected to said housing part by way of the connector strip (5).

12. Window lifting driver unit according to Claim 11, the electronics portion (47) and the transmission portion (43) being integrally connected to one another.

## Revendications

1. Élément de boîtier (1) comprenant une barrette de connexion (5) avec un corps de base en plastique (9) dans lequel sont montées une pluralité de broches (15), une pluralité de protubérances en matière plastique (11), la ou chaque protubérance en matière plastique (11) entourant à chaque fois une broche (15) sur la barrette de connexion (5) et montant jusqu'à la broche respective (15), et un boîtier de connecteur (7) comprenant un fond de boîtier en plastique (17) qui est muni d'une pluralité d'évidements de matériau (19) de forme adaptée pour recevoir à chaque fois une protubérance en matière plastique (11), une protubérance en matière plastique (11) étant à chaque fois soudée par laser dans un évidement de matériau (19) par engagement par liaison de matière avec le fond du boîtier en plastique (17), de telle sorte que la broche respective (15) soit scellée hermétiquement par rapport au fond du boîtier en plastique (17).

2. Élément de boîtier (1) selon la revendication 1, la ou chaque protubérance en matière plastique (11) montant à chaque fois suivant un angle compris entre 20° et 60° par rapport au corps de base en plastique (9) jusqu'à la broche associée (15).

3. Élément de boîtier (1) selon la revendication 1 ou 2,
le ou chaque évidement de matériau (19) étant dimensionné de manière plus étroite que la ou chaque protubérance en matière plastique associée (11).

4. Élément de boîtier (1) selon l'une quelconque des revendications précédentes,
la surface de base de la ou de chaque protubérance en matière plastique (11) étant à chaque fois adaptée à la forme en section transversale de la ou de chaque broche (15), et la ou chaque protubérance en matière plastique (11) étant à chaque fois réalisée avec une inclinaison constante par rapport à la broche associée (15).

5. Élément de boîtier (1) selon l'une quelconque des revendications précédentes, dans lequel la ou chaque protubérance en matière plastique (11) est à chaque fois réalisée sous forme de tronc de pyramide avec une surface de base rectangulaire, dans lequel est à chaque fois disposée centralement une broche rectangulaire (15).

6. Élément de boîtier (1) selon l'une quelconque des revendications précédentes,
la ou chaque protubérance en matière plastique (11) se composant du même plastique que le corps de base en plastique (9).

7. Élément de boîtier (1) selon l'une quelconque des revendications précédentes,
la barrette de connexion (5) et le boîtier de connecteur (7) étant connectés par le biais d'une connexion encliquetable.

8. Procédé de fabrication d'un élément de boîtier (1),
la barrette de connexion (5) étant fabriquée d'une seule pièce avec une pluralité de passages (13), autour desquels est à chaque fois disposée une protubérance en matière plastique (11) montant jusqu'au passage, une broche (15) étant chaque fois introduite dans un passage (13), un boîtier de connecteur (7) étant fabriqué avec un fond de boîtier en plastique (17) dans lequel sont pratiqués des évidements de matériau (19) pour recevoir à chaque fois une protubérance en matière plastique (11), la barrette de connexion (5) et le boîtier de connecteur (7) étant placés l'un sur l'autre de telle sorte qu'une protubérance en matière plastique (11) soit chaque fois reçue dans un évidement de matériau (19) respectif, et la ou chaque protubérance en matière plastique (11) étant soudée par laser dans l'évidement de matériau associé (19) avec le fond de boîtier en plastique (17) de telle sorte que le matériau de la protubérance en matière plastique (11) migre à chaque fois vers la broche associée (15), et que la broche respective (15) soit scellée hermétiquement par rapport au fond de boîtier en plastique (17).

9. Procédé de fabrication d'un élément de boîtier selon la revendication 8,
la barrette de connexion (5) et le boîtier de connecteur (7) étant placés l'un sur l'autre sous pression.

10. Procédé selon la revendication 8 ou 9,
la barrette de connexion (5) et le boîtier de connecteur (7) étant encliquetés pour réaliser une pression.

11. Unité d'entraînement de lève-glace (41), comprenant une portion de transmission (43), un moteur (45) qui est accouplé à la portion de transmission (43), et une portion électronique (47) qui comprend un élément de boîtier (1) selon l'une quelconque des revendications précédentes ainsi qu'une platine de commande (49) connectée à celui-ci par le biais de la barrette de connexion (5).

12. Unité d'entraînement de lève-glace selon la revendication 11,
la portion électronique (47) et la portion de transmission (43) étant connectées intégralement l'une à l'autre.
